# EUROPEAN PATENT SPECIFICATION

(11) **EP 0 917 090 B1**
(45) Date of publication and mention of the grant of the patent: **11.05.2005**
(21) Application number: 98309126.5
(22) Date of filing: 06.11.1998
(51) Int. Cl.: G06K 11/12

(54) **Distinguishing a contact input**
Kontakteingabeunterscheidung
Discerner une entrée par contact

(30) Priority: 17.11.1997 US 971414
(43) Date of publication of application: 19.05.1999
(73) Proprietor: Hewlett-Packard Company, A Delaware Corporation, Palo Alto, CA 94304 (US)
(72) Inventor: Ong, Joon-Suan, Singapore 400010 (SG)
(74) Representative: Powell, Stephen David

(56) References cited:
- JP-A- 9 282 077
- PATENT ABSTRACTS OF JAPAN vol. 016, no. 171 (P-1343), 24 April 1992 (1992-04-24) & JP 04 015816 A (MITSUBISHI ELECTRIC CORP), 21 January 1992 (1992-01-21)

## Description

The present invention relates generally to input devices. In particular, it relates to a method for distinguishing between a pressure generated by a point contact and a pressure generated by an area contact on an input device.

Computational devices which use touch panels as one of their input means are found in abundance in the market place today. A touch panel can either be used independently or in tandem with another input means, such as a keyboard, for data input. In particular, Personal Digital Assistants (PDAs) use transparent resistive digitizer panels, or touch panels, which are overlaid on Liquid Crystal Displays (LCDs) for detecting a pen-tap, or a touch, and for resolving a set of coordinates of the pen-tap location. The resolved coordinate information can then be used to track the pen-tap location on the surface of the digitizer panel. Further uses for the pen-tap coordinates include the implementation of interactive on-screen input and handwriting recognition features in PDAs.

Resistive digitizer panels typically make use of a pair of transparent X-Y substrates with resistive layers which are alternatingly energized by a primary voltage to produce a series of secondary voltages upon pen-taps. Each of these secondary voltages is sampled and quantized to provide a controlling processor with a corresponding digital voltage level. The processor subsequently correlates these digital voltage levels to the X-Y coordinates of the pen-tap locations.

To date, most resistive digitizer panels cannot distinguish between pen-tap, or input, and pen-erase, or delete, actions without the use of active electronics in the pen. However, an advances digitizer panel working with an active pen can detect the pen tip which is in proximity to the panel surface, in addition to pen-tap and pen-erase actions. Such an active pen, however, must contain elaborate internal electronics requiring a supply cable or a battery for power. This requirement obviously constrains its mobility and ease of handling.

The present invention is intended to provide a solution, or at least an improvement, to the problem of using a pen which requires a power supply for working with a resistive digitizer panel to provide an erase capability. Such a solution provides a simple method to cost-effectively enable a touch panel to perform tap and erase functions without the need for any electronics in the pen.

JP-A-09 282 077 discloses a pressure sensitive resistance tablet coordinate input device. To distinguish between pressure with a stylus and pressure with a finger, voltages across respective sheets are measured and a respective contact resistance value is calculated.

According to a first aspect of the present invention, there is provided a method for distinguishing between a pressure generated by a substantially point contact and a pressure generated by an area contact on an input device, the input device having a pair of resistive layers capable of forming an electrical contact with a contact resistance between them in response to a pressure to further form an H-resistor network, wherein the electrical contact forms a shunt resistor corresponding to the horizontal bar of the H, and serves to divide the internal resistance of each resistive layer, and each divided internal resistive layer provides a pair of series resistors to form respective vertical arms of the H-resistor network, the method comprising:
collecting a first set of information relating to the resistance of at least one of the series resistors of each resistive layer to determine a location of the electrical contact;
determining information relating to the resistance of a series circuit comprising a part of a first of the resistive layers, the contact resistance of the electrical contact, and a part of the second of the resistive layers; characterised by
obtaining predetermined threshold information from a set of predetermined location-specific threshold information relating to the resistance of said series circuit using the first set of information; and
comparing the information relating to the resistance of said series circuit with the predetermined threshold information for distinguishing between the pressure, generated by said substantially point contact and the pressure generated by said area contact on said input device.

According to a second aspect of the present invention, there is provided an input device having a pair of resistive layers capable of forming an electrical contact with a contact resistance between them in response to a pressure to further form an H-resistor network, wherein the electrical contact forms a shunt resistor corresponding to the horizontal bar of the H, and serves to divide the internal resistance of each resistive layer, and the divided internal resistance of each resistive layer provides a pair of series resistors to form respective vertical arms of the H resistor network, the input device further comprising:
means arranged to collect a first set of information relating to the resistance of at least one of the series resistors of each resistive layer;
means arranged to determine a second set of information relating to the resistance of a series circuit comprising at least one of the series resistors of each resistive layer and the electrical contact;
characterised in that the input device further comprises:
means arranged to access predetermined threshold information relating to the resistance of said series circuit using the first set of information and;
means arranged to compare the second set of information with the predetermined threshold information for distinguishing between a pressure generated by a substantially point contact and a pressure generated by an area contact, on the input device.

Figure 1 is a partial exploded view of a prior art resistive digitizer panel.
Figure 2 is an electrical model of the resistive layers and contact resistance connected together in the resistive digitizer panel of Figure 1.
Figure 3 is an illustration of an input device using a preferred embodiment of the present invention to enable the resistive digitizer panel of Figure 1 to distinguish between a pressure made by a point contact and a pressure made by an area contact.
Figure 4 is a flow chart of the preferred embodiment of the present invention used by the input device of Figure 3.
Figure 5 is an electrical model of the resistive layers, the contact resistance and a supply resistor connected together in the input device of Figure 3.
Figure 6 is a map of equi-series threshold resistance lines of the resistive digitizer panel uses in the input device of Figure 3.

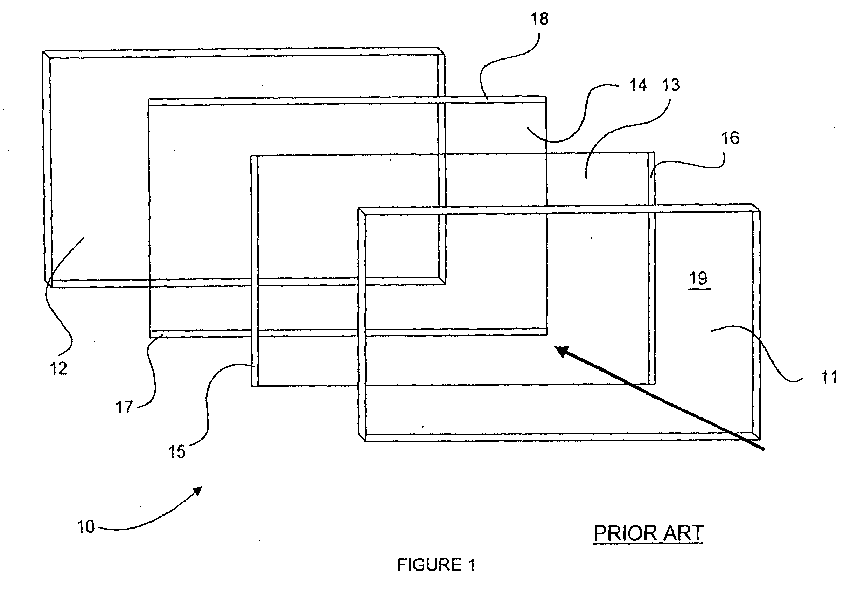

A preferred embodiment of the invention will be described in the ensuing paragraphs as a method for enabling a prior art resistive digitizer panel 10, shown in Figure 1, to distinguish between a pen-tap action and a pen-erase action. The resistive digitizer panel 10, which is preferably transparent, is placed above the display of a PDA (not shown) for providing a means for input. An arrow representing the viewing direction of the display is also shown in the Figure 1.

The resistive digitizer panel 10 is made of a top substrate 11 stacked on resistive layer 14 sandwiched between these substrates. The top substrate 11 has a planar input surface 19 facing the viewing direction, and an opposing surface which faces the display having the X-axis resistive layer 13 formed thereon. Facing this X-axis resistive layer 13 is one of the surfaces of the bottom substrate 12, which is in turn overlaid with the Y-axis resistive layer 14. However, the substrates are disposed in a known manner such that the resistive layers are not normally in electrical contact. In addition, for the resistive digitizer panel 10 to remain transparent and therefore allow light to be transmitted to and from the underlying display, the substrates and the resistive layers must also be transparent.

The substrates are electrically insulative while, conversely, the resistive layers are electrically conductive. To allow for connectivity with other electrical elements, therefore, a pair of electrodes are formed on each resistive layer. One end of the X-axis resistive layer 13 is formed with a first electrode 15, while the opposing end in the X-direction is formed with a second electrode 16. Similarly, one end of the Y-axis resistive layer 14 is formed with a third electrode 17, and the opposing end in the Y-direction with a fourth electrode 18.

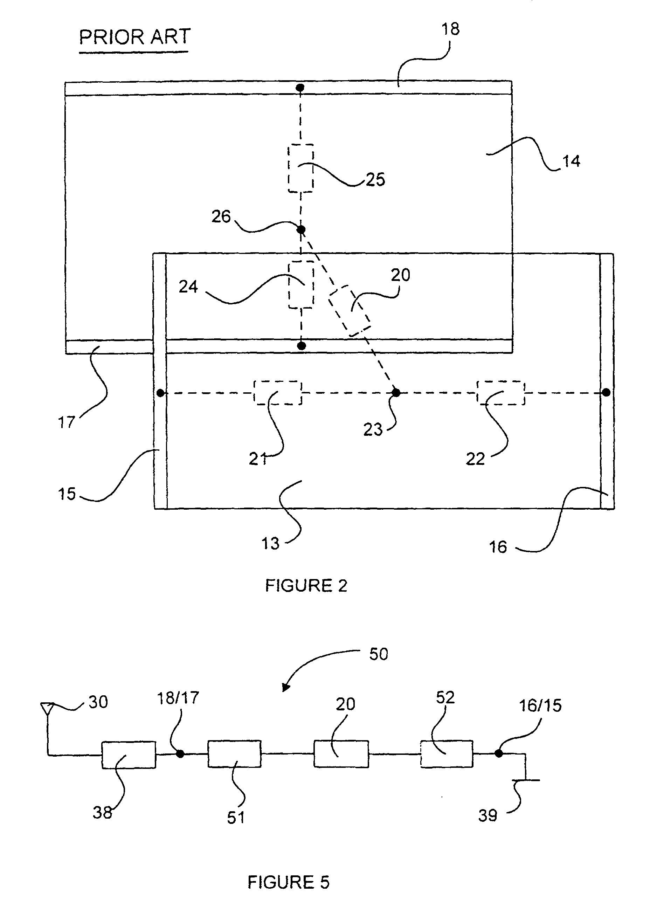

When a pressure is applied to a contact position on the planar input surface 19 of the resistive digitizer panel 10, an electrical contact is established between the resistive layers. A contact resistance 20, illustrated in broken lines using Figure 2, is thus formed during a transient period when the pressure is applied. As shown in Figure 2 in further broken lines, the resistive layers are modeled by two pairs of series resistors which are formed from the divided internal resistances of the resistive layers. Each pair of series resistors are connected in series between each pair of electrodes of each resistive layer and are in turn interconnected by the contact resistance 20 during the transient period. An H-resistor network is formed as a result of such an arrangement. For example, the X-axis resistive layer 13 and the corresponding pair of electrodes are modeled by a first series resistor 21 connected to a second series resistor 22 via a first common node 23. The first electrode 15 then forms an open node connected to the first series resistor 21, and the second electrode 16 forms another open node connected to the second series resistor 22. Similarly, the Y-axis resistive layer 14 and the corresponding pair of electrodes are modeled by a third series resistor 24 connected to a fourth series resistor 25 via a second common node 26. The third electrode 17 then forms an open node connected to the third series resistor 24, and the fourth electrode 18 forms another open node connected to the fourth series resistor 25. The contact resistance 20 hence connects to the pairs of series resistors at the common nodes, the positions of which lie generally rectilinear with the contact position along the direction of the applied pressure.

Due to the nonlinear resistive characteristic of the resistive layers, the series resistances of each resistive layer do not behave like the divided resistances of a potentiometer. As is commonly known, a wiper in a potentiometer linearly divides the resistance of a resistive element in the potentiometer according to its position on the resistive element. For the resistive layers, however, the resistance values of the series resistors 21, 22, 24 and 25 are determined by several factors, including the X and Y distances of the contact position from two orthogonal edges of the corresponding resistive layer.

Therefore, in order to determine the location of a pen-tap providing the pressure at the contact position, information relating to the resistance values of the series resistors 21, 22, 24 and 25 according to the contact position are collated prior to the operation of the resistive digitizer panel 10. For example, by applying a DC voltage across the electrodes of one resistive layer and reading the voltage off the corresponding common node, due to simple voltage division of the DC voltage, through any of the open nodes of the other resistive layer, the resistance value of the resistive layer is predetermined and the information stored in a memory. This process is subsequently repeated for the other resistive layer to obtain the corresponding resistance value, and continued for all possible contact positions. This information is then retrieved by a controlling processor (not shown) during operation to compare with subsequently measured voltages to give resolved X-Y coordinate information on the pen-tap location.

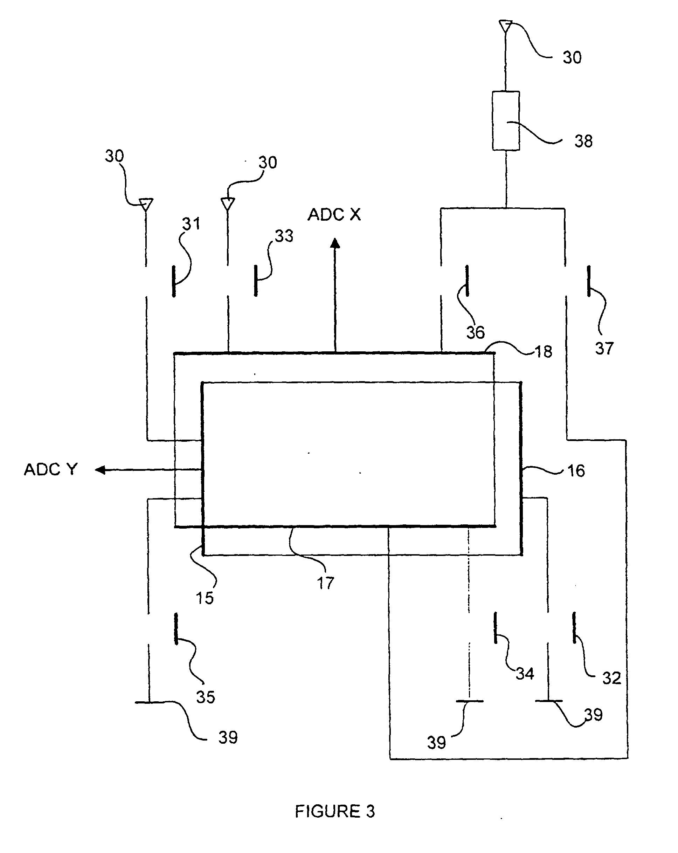

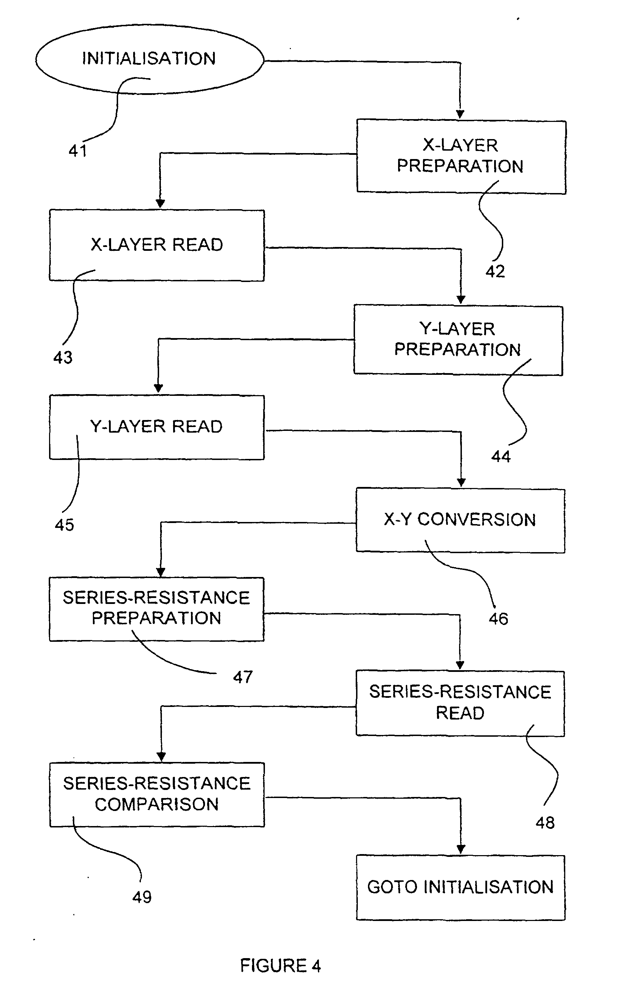

To distinguish between pen-tap and pen-erase actions, however, the behaviour of the resistive layers during each type of action must be considered. Firstly, the contact resistance formed between the resistive layers due to a point contact is generally higher than the contact resistance formed due to an area contact, for a constant applied pressure. In addition, the common nodes representing the electrical connections between the resistive layers and the contact resistance due to a point contact lie generally rectilinear with the point of contact along the direction of the applied pressure. On the other hand, the common nodes formed due to an area contact lie generally rectilinear with the centre point of the area of contact along the direction of the applied pressure. Since a pen-tap is normally attributed to a point contact, while a pen-erase action, intuitively, involves the use of a soft and wide erasing surface which represents an area contact, it is therefore appropriate to provide a device to distinguish between a point contact and an area contact for distinguishing a pen-tap from a pen-erase respectively. Based on this understanding, an input device is provided in Figure 3 and is described using the preferred embodiment illustrated in Figure 4.

During an operation to locate a pen-down action, which includes pen-tap and pen-erase actions, a series of switches are toggled as described in an algorithm using Figure 4. When the algorithm first begins in an initialisation state 41, all switches in the circuit shown in Figure 3 are reset to their normally-open condition. A first pair of switches 31 and 32, shown in Figure 3 as connecting the first electrode 15 to a voltage (VDD) 30 and the second electrode 16 to a reference (REF) 39 respectively, are then closed as the algorithm enters an X-layer preparation state 42. As a result, a voltage difference (VDD - REF) is applied across the X-axis resistive layer 13 to form a voltage field in the X-direction. The algorithm then performs a short delay for the voltage field to stabilize before proceeding to the next state.

The fourth electrode 18 is shown in Figure 3 as also being connected to an X-layer analog-to-digital convertor (ADC X). Hence when the voltage field stabilizes, the algorithm enters an X-layer read state 43 where a secondary voltage will be formed at the fourth electrode 18 during a pen-down. This secondary voltage will then be converted by the ADC X to a corresponding digital voltage level which is subsequently read by the controlling processor.

The first pair of switches 31 and 32 are reset before the algorithm enters a Y-layer preparation state 44. On entering the Y-layer preparation state 44, a second pair of switches 33 and 34 in Figure 3 are closed and thus connects the fourth electrode 18 to the voltage (VDD) 30 and the third electrode 17 to the reference (REF) 39 respectively. A delay is again performed for a Y-direction voltage field to settle in the Y-axis resistive layer 14 before the algorithm enters the next state.

The first electrode 15 is shown in Figure 3 to be connected to a Y-layer analog-to-digital convertor (ADC Y). When the algorithm proceeds to a Y-layer read state 45, another secondary voltage produced at the common nodes during the same pen-down action is read at the first electrode 15. This secondary voltage is converted to a corresponding digital voltage level by the ADC Y, which is read by the controlling processor.

The digital voltage levels read during the X- layer read state 43 and the Y-layer read state 45 are subsequently processed by the controlling processor, and compared with a set of predetermined values stored in the memory for resolving the X-Y coordinates of the current pen-down location, and thus the common node position. This process occurs in an X-Y conversion state 46 of the algorithm.

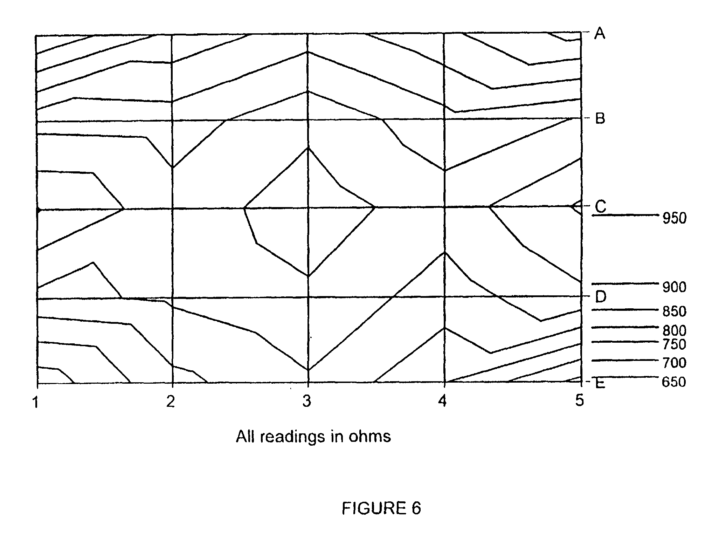

Having determined the X-Y coordinates of the current pen-down location, the algorithm now enters a next state where preparations are made to distinguish between a point contact pen-down and an area contact pen-down. In a series-resistance preparation state 47, a series of switches 32, 35, 36 and 37 in Figure 3 are closed to effectively short-circuit the first electrode 15 to the second electrode 16, and the third electrode 17 to the fourth electrode 18. By closing these switches, the device can now be modeled by a resistor series circuit 50 illustrated in Figure 5. The resistor series circuit 50 contains a Y-layer resistor 51, formed from the series resistors 24 and 25 (shown in Figure 2) connected in parallel, connected in series with the contact resistance 20 and an X-layer resistor 52, formed from the series resistors 21 and 22 (also shown in Figure 2) connected in parallel. The resistor series circuit 50 is also connected to the (VDD) 30 via a supply resistor 38, and to the (REF) 39 via the short-circuited first and second electrodes 15 and 16. The algorithm in Figure 4 then waits for the voltage difference (VDD - REF) applied across the resistor series circuit 50 to stabilize before entering a next state.

A series-resistance read state 48 shown in Figure 4 begins once the voltage difference (VDD - REF) stabilizes. In this state, the ADC X connected to the short-circuited third and fourth electrodes 17 and 18 reads and converts a further secondary voltage produced thereby, into a corresponding digital voltage level. In a further series-resistance conversion state 49, this digital voltage level is converted into information on the series resistance of the Y-layer resistor 51, the contact resistance 20 and the X-layer resistor 52. This series resistance is subsequently compared with a predetermined threshold resistance value retrieved from a memory, which was stored prior to operation, using the known position of the common nodes. The predetermined threshold resistance value represents the series resistance when the pressure is applied through a point contact, and as such, a lower measured series resistance will indicate the presence of an area contact. This predetermined threshold resistance value was prepared prior to operation by way of calibration, and a map of this value according to all possible common node positions on the resistive digitizer panel 10 of Figure 1 is shown in Figure 6.

The preferred embodiment of the present invention described in the preceding paragraphs is not to be construed as limitative. For example, the series of switches 32, 35, 36 and 37 in Figure 3 need not be closed simultaneously in the series-resistance preparation state 47 in Figure 4, for the embodiment to effectively distinguish between a point contact and an area contact. The switches 32 and 37 may remain open in this state, and as a result, the series resistance map in Figure 6 will consequently become more complex. In another example, the predetermined threshold values stored in the memory need not be restricted to series resistance values. As long as the device is capable of using the predetermined threshold values to determine the contact resistance, it will be able to distinguish between a point contact and an area contact without departing from the scope of the invention.

## Claims

1. A method for distinguishing between a pressure generated by a substantially point contact and a pressure generated by an area contact on an input device, the input device having a pair of resistive layers capable of forming an electrical contact with a contact resistance (20) between them in response to a pressure to further form an H-resistor network, wherein the electrical contact forms a shunt resistor corresponding to the horizontal bar of the H, and serves to divide the internal resistance of each resistive layer, and each divided internal resistive layer provides a pair of series resistors to form respective vertical arms of the H-resistor network, the method comprising:
collecting (41-46) a first set of information relating to the resistance of at least one of the series resistors of each resistive layer to determine a location of the electrical contact;
determining (47-48) information relating to the resistance of a series circuit (50) comprising a part of a first of the resistive layers, the contact resistance of the electrical contact, and a part of the second of the resistive layers; **characterised by**
obtaining predetermined threshold information from a set of predetermined location-specific threshold information relating to the resistance of said series circuit using the first set of information; and
comparing (49) the information relating to the resistance of said series circuit with the predetermined threshold information for distinguishing between the pressure, generated by said substantially point contact and the pressure generated by said area contact on said input device.

2. The method as in claim 1, wherein said part of each of said resistive layers is one of the resistors formed by the respective divided internal resistance and is connected in parallel with the other resistor formed by the respective divided internal resistance.

3. The method as in claim 1 or 2, wherein collecting the first set of information includes applying (42, 44) a first voltage across the series resistors of each resistive layer.

4. The method as in claim 3, wherein collecting the first set of information further includes collecting a set of information on the voltage difference across at least one of the series resistors of each resistive layer.

5. The method as in any preceding claim, wherein determining the information relating to the resistance of said series circuit (50) includes applying (47) a second voltage across said series circuit and a resistor (38) of pre-selected resistance.

6. The method as in claim 5, wherein determining the information relating to the resistance of said series circuit further includes measuring the voltage difference across the series resistors and the electrical contact.

7. The method as in claim 6, wherein determining the information relating to the resistance of said series circuit further includes converting the measured voltage into the series resistance of the series resistors and the electrical contact.

8. The method as in any preceding claim, wherein obtaining the predetermined threshold information includes obtaining the predetermined threshold information from a set of predetermined threshold series resistances of at least one of said parts of each resistive layer and the electrical contact in response to a pressure generated by a point contact.

9. A method according to any preceding claim wherein the pressure is generated by a pen and a substantially point contact is interpreted as a pen-tap or pen write action and a pressure generated by an area contact is interpreted as a pen-erase action.

10. An input device having a pair of resistive layers capable of forming an electrical contact with a contact resistance (20) between them in response to a pressure to further form an H-resistor network, wherein the electrical contact forms a shunt resistor corresponding to the horizontal bar of the H, and serves to divide the internal resistance of each resistive layer, and the divided internal resistance of each resistive layer provides a pair of series resistors to form respective vertical arms of the H resistor network, the input device further comprising:
means arranged to collect a first set of information relating to the resistance of at least one of the series resistors of each resistive layer;
means arranged to determine a second set of information relating to the resistance of a series circuit (50) comprising at least one of the series resistors of each resistive layer and the electrical contact;
**characterised in that** the input device further comprises:
means arranged to access predetermined threshold information relating to the resistance of said series circuit using the first set of information and;
means arranged to compare the second set of information with the predetermined threshold information for distinguishing between a pressure generated by a substantially point contact and a pressure generated by an area contact, on the input device.

11. An input device comprising as in claim 10, comprising a pen, wherein the point contact is generated by a pen-tap or pen write action and the area contact is generated by a pen-erase action.

## Patentansprüche

1. Ein Verfahren zum Unterscheiden zwischen einem Druck, der im Wesentlichen durch einen Punktkontakt erzeugt wird, und einem Druck, der durch einen Bereichskontakt erzeugt wird, auf eine Eingabevorrichtung, wobei die Eingabevorrichtung ein Paar aus resistiven Schichten aufweist, die in der Lage sind, einen elektrischen Kontakt mit einem Kontaktwiderstand (20) zwischen denselben zu bilden, ansprechend auf einen Druck, um ferner ein H-Widerstandsnetzwerk zu bilden, wobei der elektrische Kontakt einen Nebenschlusswiderstand bildet, der dem horizontalen Balken Leiste des H entspricht und dazu dient, den internen Widerstand jeder resistiven Schicht zu teilen, und jede geteilte interne resistive Schicht liefert ein Paar aus Reihenwiderständen, um jeweilige vertikale Arme des H-Widerstandsnetzwerks zu bilden, wobei das Verfahren folgende Schritte aufweist:
Sammeln (41 - 46) eines ersten Satzes aus Informationen, die sich auf den Widerstand von zumindest einem der Reihenwiderstände jeder resistiven Schicht beziehen, um eine Position des elektrischen Kontakts zu bestimmen;
Bestimmen (47 - 48) von Informationen, die sich auf den Widerstand einer Reihenschaltung (50) beziehen, die einen Teil einer ersten der resistiven Schichten, den Kontaktwiderstand des elektrischen Kontakts und einen Teil der zweiten der resistiven Schichten aufweist; **gekennzeichnet durch**
Erhalten von vorbestimmten Schwelleninformationen von einem Satz von vorbestimmten positionsspezifischen Schwelleninformationen, die sich auf den Widerstand der Reihenschaltung beziehen, unter Verwendung des ersten Satzes von Informationen; und
Vergleichen (49) der Informationen, die sich auf den Widerstand der Reihenschaltung beziehen, mit den vorbestimmten Schwelleninformationen zum Unterscheiden zwischen dem Druck, der im Wesentlichen **durch** den Punktkontakt erzeugt wird, und dem Druck, der **durch** den Bereichskontakt erzeugt wird, auf die Eingabevorrichtung.

2. Das Verfahren gemäß Anspruch 1, bei dem der Teil jeder der resistiven Schichten einer der Widerstände ist, die durch den jeweiligen geteilten internen Widerstand gebildet werden, und parallel zu dem anderen Widerstand geschaltet ist, der durch den jeweiligen geteilten internen Widerstand gebildet wird.

3. Das Verfahren gemäß Anspruch 1 oder 2, bei dem das Sammeln des ersten Satzes von Informationen das Anlegen (42, 44) einer ersten Spannung über die Reihenwiderstände jeder resistiven Schicht umfasst.

4. Das Verfahren gemäß Anspruch 3, bei dem das Sammeln des ersten Satzes von Informationen ferner das Sammeln eines Satzes von Informationen über die Spannungsdifferenz über zumindest einen der Reihenwiderstände jeder resistiven Schicht umfasst.

5. Das Verfahren gemäß einem der vorhergehenden Ansprüche, bei dem das Bestimmen der Informationen, die sich auf den Widerstand der Reihenschaltung (50) beziehen, das Anlegen (47) einer zweiten Spannung über die Reihenschaltung und einen Widerstand (38) eines vorausgewählten Widerstands umfasst.

6. Das Verfahren gemäß Anspruch 5, bei dem das Bestimmen der Informationen, die sich auf den Widerstand der Reihenschaltung beziehen, ferner das Messen der Spannungsdifferenz über die Reihenwiderstände und den elektrischen Kontakt umfasst.

7. Das Verfahren gemäß Anspruch 6, bei dem das Bestimmen der Informationen, die sich auf den Widerstand der Reihenschaltung beziehen, ferner das Umwandeln der gemessenen Spannung in den Reihenwiderstand der Reihenwiderstände und des elektrischen Kontakts umfasst.

8. Das Verfahren gemäß einem der vorhergehenden Ansprüche, bei dem das Erhalten der vorbestimmten Schwelleninformationen das Erhalten der vorbestimmten Schwelleninformationen von einem Satz von vorbestimmten Schwellenreihenwiderständen von zumindest einem der Teile jeder resistiven Schicht und dem elektrischen Kontakt ansprechend auf einen Druck umfasst, der durch einen Punktkontakt erzeugt wird.

9. Ein Verfahren gemäß einem der vorhergehenden Ansprüche, bei dem der Druck durch einen Stift erzeugt wird und im wesentlichen ein Punktkontakt als eine Stiftabgriff- oder Stiftschreibaktion interpretiert wird, und ein Druck, der durch einen Bereichskontakt erzeugt wird, als eine Stiftlöschaktion interpretiert wird.

10. Eine Eingabevorrichtung, die ein Paar aus resistiven Schichten aufweist, die in der Lage sind, einen elektrischen Kontakt mit einem elektrischen Widerstand (20) zwischen denselben zu bilden, ansprechend auf einen Druck, um ferner ein H-Widerstandsnetzwerk zu bilden, wobei der elektrische Kontakt einen Nebenschlusswiderstand bildet, der dem horizontalen Balken des H entspricht und zum Teilen des internen Widerstands jeder resistiven Schicht dient, und wobei der geteilte interne Widerstand jeder resistiven Schicht ein Paar aus Reihenwiderständen liefert, um jeweilige vertikale Arme des H-Widerstandsnetzwerks zu bilden, wobei die Eingabevorrichtung ferner folgende Merkmale aufweist:
eine Einrichtung, die angeordnet ist, um einen ersten Satz von Informationen zu sammeln, die sich auf den Widerstand von zumindest einem der Reihenwiderstände jeder resistiven Schicht beziehen;
eine Einrichtung, die angeordnet ist, um einen zweiten Satz von Informationen zu bestimmen, die sich auf den Widerstand einer Reihenschaltung (50) beziehen, die zumindest einen der Reihenwiderstände jeder resistiven Schicht und den elektrischen Kontakt aufweist;
**dadurch gekennzeichnet, dass** die Eingabevorrichtung ferner folgende Merkmale aufweist:
eine Einrichtung, die angeordnet ist, um auf vorbestimmte Schwelleninformationen zuzugreifen, die sich auf den Widerstand der Reihenschaltung beziehen, unter Verwendung des ersten Satzes von Informationen; und
eine Einrichtung, die angeordnet ist, um den zweiten Satz von Informationen mit den vorbestimmten Schwelleninformationen zu vergleichen, zum Unterscheiden zwischen einem Druck, der im Wesentlichen durch den Punktkontakt erzeugt wird, und einem Druck, der durch einen Bereichskontakt erzeugt wird, auf die Eingabevorrichtung.

11. Ein Eingabevorrichtung gemäß Anspruch 10, die einen Stift aufweist, wobei der Punktkontakt durch eine Stiftabgriff- oder Stiftschreibaktion erzeugt wird und der Bereichskontakt durch eine Stiftlöschaktion erzeugt wird.

## Revendications

1. Un procédé destiné à distinguer entre une pression engendrée sur un dispositif d'entrée par un contact sensiblement ponctuel et une pression engendrée par un contact zonal, le dispositif d'entrée incluant une paire de couches résistantes susceptibles de former entre elles, en réponse à une pression, un contact électrique à valeur résistive (20) de contact afin de former en outre un réseau de résistances en H, dans lequel le contact électrique forme une résistance de shunt correspondant à la barre horizontale du H, et sert à diviser la valeur résistive interne de chaque couche résistante, et chaque couche résistante interne divisée constitue une paire de résistances en série afin de former des bras verticaux respectifs du réseau de résistances en H, le procédé comprenant les étapes consistant à:
collecter (41 à 46) un premier jeu d'information concernant la valeur résistive d'au moins l'une des résistances en série de chaque couche résistante pour déterminer un emplacement du contact électrique;
déterminer (47 et 48) une information concernant la valeur résistive d'un circuit en série (50) qui comprend une partie d'une première des couches résistantes, la valeur résistive de contact du contact électrique, et une partie de la deuxième des couches résistantes;
**caractérisé par** les étapes consistant à:
obtenir une information de seuil prédéterminé à partir d'un jeu d'information de seuil prédéterminé spécifique à l'emplacement concernant la valeur résistive dudit circuit en série en utilisant le premier jeu d'information; et
comparer (49) l'information concernant la valeur résistive dudit circuit en série avec l'information de seuil prédéterminé afin de distinguer entre la pression engendrée sur ledit dispositif d'entrée par ledit contact sensiblement ponctuel et la pression engendrée sur ce dispositif par ledit contact zonal.

2. Le procédé selon la revendication 1, dans lequel ladite partie de chacune desdites couches résistantes est l'une des résistances formées par la valeur résistive interne divisée respective et est connectée en parallèle avec l'autre résistance formée par la valeur résistive interne divisée respective.

3. Le procédé selon la revendication 1 ou 2, dans lequel la collecte du premier jeu d'information inclut une application (42, 44) d'une première tension entre les bornes des résistances en série de chaque couche résistante.

4. Le procédé selon la revendication 3, dans lequel la collecte du premier jeu d'information inclut en outre une collecte d'un jeu d'information concernant la différence de potentiel entre les bornes d'au moins l'une des résistances en série de chaque couche résistante.

5. Le procédé selon l'une quelconque des revendications précédentes, dans lequel la détermination de l'information concernant la valeur résistive dudit circuit (50) en série inclut une application (47) d'une deuxième tension entre les bornes de l'ensemble formé dudit circuit en série et d'une résistance (38) de valeur résistive présélectionnée.

6. Le procédé selon la revendication 5, dans lequel la détermination de l'information concernant la valeur résistive dudit circuit en série inclut en outre une mesure de la différence de potentiel entre les bornes de l'ensemble formé des résistances en série et du contact électrique.

7. Le procédé selon la revendication 6, dans lequel la détermination de l'information concernant la valeur résistive dudit circuit inclut en outre une conversion de la tension mesurée en la valeur résistive de la série formée par les résistances en série et le contact électrique.

8. Le procédé selon l'une quelconque des revendications précédentes, dans lequel l'obtention de l'information de seuil prédéterminé inclut l'obtention de l'information de seuil prédéterminé à partir d'un jeu de valeurs résistives de séries, à seuil prédéterminé, formées d'au moins l'une desdites parties de chaque couche résistante et du contact électrique en réponse à une pression engendrée par un contact ponctuel.

9. Un procédé selon l'une quelconque des revendications précédentes dans lequel la pression est engendrée par un stylet et un contact sensiblement ponctuel est interprété comme une intervention de prise de stylet ou d'écriture de stylet et une pression engendrée par un contact zonal est interprétée comme une action d'effacement de stylet.

10. Un dispositif d'entrée incluant une paire de couches résistantes susceptibles de former entre elles, en réponse à une pression, un contact électrique à valeur résistive (20) de contact afin de former en outre un réseau de résistances en H, dans lequel le contact électrique forme une résistance de shunt correspondant à la barre horizontale du H, et sert à diviser la valeur résistive interne de chaque couche résistante, et la valeur résistive interne divisée de chaque couche résistante constitue une paire de résistances en série afin de former des bras verticaux respectifs du réseau de.résistances en H, le dispositif d'entrée comprenant en outre:
un moyen agencé pour collecter un premier jeu d'information concernant la valeur résistive d'au moins l'une des résistances en série de chaque couche résistante;
un moyen agencé pour déterminer une information concernant la valeur résistive d'un circuit en série (50) qui comprend au moins l'une des résistantes en série de chaque couche résistante et le contact électrique;
**caractérisé en ce que** le dispositif d'entrée comprend en outre:
un moyen agencé pour accéder à une information de seuil prédéterminé concernant la valeur résistive dudit circuit en série en utilisant le premier jeu d'information; et
un moyen agencé pour comparer le deuxième jeu d'information avec l'information de seuil prédéterminé afin de distinguer entre une pression engendrée sur ledit dispositif d'entrée par un contact sensiblement ponctuel et une pression engendrée sur ce dispositif par un contact zonal.

11. Un dispositif d'entrée selon la revendication 10, comprenant un stylet, dans lequel le contact ponctuel est engendré par une intervention de prise de stylet ou d'écriture de stylet et un contact zonal est engendré par une intervention d'effacement de stylet.
